# EUROPEAN PATENT SPECIFICATION

(11) **EP 2 710 886 B1**
(45) Date of publication and mention of the grant of the patent: **02.09.2015**
(21) Application number: 13184871.5
(22) Date of filing: 18.09.2013
(51) Int. Cl.: A01G 9/08

(54) **A method to position a number of pots holding ornamental plants on a bed for nursery cultivation of the plants and a system for applying the method**
Verfahren zum Positionieren von mehreren Plots zum Halten von Zierpflanzen auf einem Nährbodenbett der Pflanzen und Verfahren zum Anwenden des Verfahrens
Procédé pour positionner un certain nombre de pots contenant des plantes ornementales sur un fond pour culture en pépinière de plantes et système permettant d'appliquer ce procédé

(30) Priority: 20.09.2012 EP 12185124
(43) Date of publication of application: 26.03.2014
(73) Proprietor: Strijbos, Frank Peter Johan, 5976 PK Kronenberg (NL)
(72) Inventor: Strijbos, Frank Peter Johan, 5976 PK Kronenberg (NL)
(74) Representative: Janssen, Paulus J. P.

(56) References cited:
- EP-A2- 1 647 180
- WO-A2-2012/049095
- NL-A- 9 102 086

## Description

### Field of the invention

The present invention pertains to a method to position a number of pots holding ornamental plants on a bed for nursery cultivation of these ornamental plants, the bed comprising multiple sites, each site corresponding to one of the pots. Ornamental plants (also called "garden plants") in this sense are plants that are cultivated mainly for their appearance and are thus distinguished from utilitarian and crop plants, such as those used for agriculture and vegetable crops. The method comprises providing a potting up machine that automatically fills each pot with an amount of substrate for growth of the plant, having the machine filling the number of pots with substrate, putting an ornamental plant in each of the pots filled with substrate, and lastly positioning each pot holding an ornamental plant on a site of the bed. The invention also pertains to a system for applying this method.

### Background art

Nursery cultivation of ornamental plants in pots is essentially different from growing utilitarian and crop plants since the former are cultivated in pots placed on cultivation beds (each pot typically holding only one, or at most a few plants), as opposed to growth of utilitarian and crop plants in the ground or large basins. Although the principles of using cultivation beds are the same for both types of cultivation, namely to have the opportunity to create the proper growth environment (for example by shieling the bed from environmental circumstances), provide nutrients and water in a simple, typically automated way, and make efficient use of each square meter of land, the growth in separate pots as opposed to growth in the ground or basins is an essential difference. The main reason for this difference is that harvesting of the ornamental plants this way is simplified tremendously: Since the plants are typically meant for further growth in houses, offices, gardens etc. or re-potting after they leave the cultivation bed, they have to put in a pot anyway. Putting the plants in pots only after harvesting would mean that harvesting is restricted to seasons when the soil moisture is adequate and plants are dormant. This is why throughout the years it has appeared that it is economically more convenient to nurse the plants in the pots in which they leave the cultivation bed after sufficient growth, than to nurse the plants in the ground or basins and pot them up only after harvesting. A downside of this process is that the beginning nursery process is very labour intensive, since potting up seedlings or small plants and positioning the pots on a bed takes a lot of manual operations.

In the old days, the pots were filled with seedlings or small plants at the cultivation sites of the bed. Wheelbarrows or other transport means were used to supply the substrate, pots and plants to the bed, and the pots were filled with substrate and a plant adjacent the site where the pot was to be positioned. This process was later improved by doing the potting up at one or more dedicated sites alongside the bed, and transport the filled pots to the cultivation sites on the bed, for example using a wheelbarrow, a Danish flower cart (Dutch: "Deense kar"), by hand (using trays, forks etc.), using conveyer belts or other (semi-)automatic conveying means etc. The advantage of using a dedicated potting up site alongside the cultivation bed is that supplies can be stocked in large quantities at this potting up site and need not to be transported over the bed intermittently. Also, space is saved since at the bed there is no longer a need of freeing space for the potting up of plants. Since the early nineties of last century, heavily automated potting up machines have become available. These machines typically fill pots with substrate and make a hole in the substrate for putting in a plant (which can also be put in automatically or in the alternative, by hand). Such machines can be obtained for example from JAVO BV, Noordwijkerhout, The Netherlands (see also Dutch patents NL1032165 and NL2000087). These machines are typically heavy, stationary machines that are typically placed at a site along the bed or in a covered area such as a shed or hall near the cultivation bed. The filled pots are typically transported to the bed using conveying belts. This method is the very labor extensive when compared to the former methods. WO-A-2012/049095 discloses a potting up machine which is heavy, but which in principal is movable due to the presence of wheels.

### Object of the invention

There is still a need for an improved method and system to position a number of pots holding ornamental plants on a bed for nursery cultivation of these ornamental plants, the method and system mitigating at least some of the prior art disadvantages.

### Summary of the invention

The object of the invention has been met by devising a method according to the preamble wherein the potting up machine is transported along a length of the bed while it is operable for filling the pots with substrate, wherein each pot is filled with substrate when the machine is adjacent the site corresponding to that pot.

Against all developments that took place during the last 60 years, applicant has recognised that it is advantageous to fill the pots adjacent the site where they should be placed on the cultivation bed, that is, using a potting up machine that is transported along a length of the bed whilst operable for filling the pots (meaning that the machine is either in actual operation, or at least in a state where it is stand-by to enable immediate use when prompted, as opposed to for example a state wherein the machine is shutdown to be turned into a state optimised for transport by locking the vulnerable parts and/or removing the supplies). This solution not only goes against the developments in nursery cultivation, it also goes against the general feeling that heavy and expensive equipment, which potting machines are, should be stationary while in use and preferably even stationed in a closed environment. However, applicant found that by using commonly known transporting technology, such machines can be conveniently transported along a length of the bed (which covers both a situation where the machine is transported next to the bed and over the bed). By transporting the machine along a length of the bed, the filled pots only need to be transported over the bed over a corresponding small band that extends transverse of the said length, beginning at the machine and ending at the downstream end of the width of the bed. All sites in this band are adjacent the machine in the sense of the present invention. The transport to all of these sites can be done for example by hand, or using simple conveying means such as conveyer belt. The new method combines the advantage of an automated filling of the pots with preparing of the pots adjacent the site where they are to be positioned on the bed which saves labour and/or the investment in and maintenance of automatic conveying means.

The invention also pertains to a system according to the preamble, wherein the system comprises a bed for the nursery cultivation of the plants, the plants being present in separate pots, wherein the bed comprises multiple sites, each site being suitable for holding one pot, a transporting means covering a length of the bed, which system extends along the multiple sites, and a potting up machine for automatically filling each pot with an amount of substrate for growth of the plant, wherein the potting up machine is in operative connection with the transporting means such that the machine is transportable along a length of the bed to reach positions adjacent each of the said sites while it is operable for filling the pots with substrate.

It is noted that the present invention foresees in an adapted type of potting up machine, for example a machine that can carry a significant supply of substrate and pots.

### Definitions

A *pot* is any container suitable to hold an ornamental plant in an amount of substrate. A pot typically has one compartment for holding the plant but may also comprise two or more compartments for holding multiple plants.

An *ornamental plant* is a plant grown mainly for decorative purposes, typically for use in gardens and landscape design projects, as houseplants, for cut flowers and specimen display.

*Nursery cultivation* is the growing of seedlings or small plants to a predetermined, typically larger size, for example followed by re-potting (to a larger pot) or commercial sale.

A *tray* is a carrier for holding multiple pots.

*Operable* means being in a state such that direct use or operation is possible. An operable potting up machine is thus in a state that it is provided with the needed supplies such as substrate, pots and plants, and is connectable with, connected to, or has on board a power source to drive the machine.

A *matrix* is a regular formation of elements (for example pots) in columns and rows, comprising at least two elements.

*Adjacent* means near, for example contiguous with.

A bed is a surface suitable for holding great numbers of pots, typically closely spaced to each other, for example at a distance such that space is optimally used without the growing plants interfering. The bed may be in the open area or covered by any constitution to shield the bed from one or more environmental influences such as wind, rain, dust etc.

*Automatically* means without operator intervention. Automatically does not preclude that the process is initiated or stopped by an operator.

A *site* is a space at the bed suitable for holding a pot or performing a sub-process of the nursery cultivation.

*Along a length* of an item covers any length that stretches along the item, but typically covers more than 50% of the entire length, further preferably more than 55, 60, 65, 70, 75, 80, 85, 90, 95% of the length of the item up to 100% of the length of the item.

### Embodiments

In an embodiment the machine is transported along a length and width of the bed. This embodiment may shorten the distance over which a filled pot is to be transported over the bed from the potting up machine to its site on the bed.

In another embodiment the machine is transported over the bed. In this embodiment, instead of being transported over a route next to the bed, the machine is transported over a trajectory that projects over the bed. Although this goes against the common sense in the art of nursery cultivation of "leaving heaving machinery of the bed", in particular against "not moving heavy machinery over the bed" (since a bed is typically vulnerable and expensive surface), applicant recognised that this way the machine can in principle reach each site within a relatively short distance, even such that additional transporting means of the filled pots may be dispensed with (in particular when the machine is transported in essence over the complete surface of the bed). By transporting the machine across the bed this way, time and machinery can be saved considerably. Since the transport means may be as simple as a path suitable for carrying and guiding a wheeled potting up machine, no significant additional investment needs to be made.

In an embodiment, the filling of the pot with substrate and the ornamental plant is followed by an automatic conveying of the pot from the machine towards the bed. This embodiment saves labour. Typically, one or two operators are present at the potting up machine for example for manually putting the plants in the pots filled with substrate. Requiring these operators to position each pot on the bed would interfere too much with the other operations. In an embodiment the conveying comprises transporting the pot from the machine towards the bed using a conveyer belt. In a preferred further embodiment, the conveying comprises the steps of making a matrix of pots on an intermediate carrier that is transported along with the machine, where after the matrix of pots is unloaded to the bed. This way, there is no need to position each pot individually on the bed, which would typically require complex positioning equipment. By assembling the pots on an intermediate carrier, which type of assembling as such is known for example from NL9102086, simplifies the positioning of the pots on the bed. In an embodiment the intermediate carrier is chosen from an in essence flat plate and a fork. A flat plate is advantageous in that a large matrix of pots can be assembled before being positioned on the bed. A fork (such as the STOLZE hand held aluminium pot fork, available from Argus Pacific, Narre Warren, Victoria, Australia) is advantageous in that it requires only simple technical means to fill a fork with multiple pots, where after the fork may for example be manually guided towards the bed to position the pots on the bed.

In an embodiment the machine is transported over the bed intermittently. In this embodiment the machine is placed at a potting up site at the bed and multiple pots are filled with substrate and plants while the machine remains stationary. When a significant number of sites of the bed (for example the sites within an area extending from two meters upstream to two meters downstream of the machine) has been filled with pots, the machine is transported further over the bed towards a location where additional pots have to be positioned on the bed. This transport may be fully dependent on manual labour (for example by having a wheeled machine pushed further by one or more operators), fully automated (for example by having a motored machine, for example wheeled of provided with caterpillar tracks, being guided by electronica means to reach a further position), or any other set-up.

In another embodiment the machine is transported continuously. In this embodiment the machine is transported preferably automatically, using a guiding means, automatic location means, driving means (either as part of the machine, or external) and programmed transport instructions. The speed at which the machine is transported over or next to the bed should preferably match the speed at which the pots are filled with substrate and plants. Typically, the speed is programmed and operator adaptable during the process of positioning the post on the bed.

In an embodiment the machine is transported over a rail system that in essence extends along all sites of the bed. Rail systems for transporting plants and supply carts for example are well-known in the art and such systems can be adapted for the transport of a potting up machine. Typically, the machine itself is provided with means (for example wheels) that cooperate with the rails, and the rails itself should be construed and supported such that they can carry the weight of the potting up machine. Having such a rail system available advantageously means that it can be used to supply substrate and pots to the potting up machine, for example by using a simple wagon fitting the rails. In this respect it is noted that in an embodiment of the system according to the invention, this system further comprises one or more wagons in operative connection with the transporting means, the wagons being suitable for supplying substrate and pots to the potting up machine while it is in operation for filling the pots.

In a first embodiment of the system the transporting means in essence covers a length and width of the bed corresponding to the embodiment of the method according to the invention as described here-above. Alternatively the transport means projects over the bed and thus may extend in essence along each site of the bed.

In another embodiment of the system it comprises conveying means, in particular a conveying belt, for conveying the pot from the machine towards the bed.

The system may also comprise an intermediate carrier that is transported along with the machine, the carrier being an intermediate for carrying pots in the form of a matrix, after these pots have been filled at the potting up machine with substrate and a plant, and before being positioned on a site of the bed, as explained herein before.

### Examples

Figure 1 schematically shows a bed for nursery cultivation of ornamental plants in pots.
Figure 2 schematically shows a number of pots provided with substrate and plants, positioned on a bed.
Figure 3 schematically shows a potting up machine for use in the present method and system.
Figure 4 schematically shows the layout of a transport rails over a cultivation bed.
Figure 5 schematically shows a rails for use in the invention.
Figure 6 schematically shows wagons for use in the invention.

### Figure 1

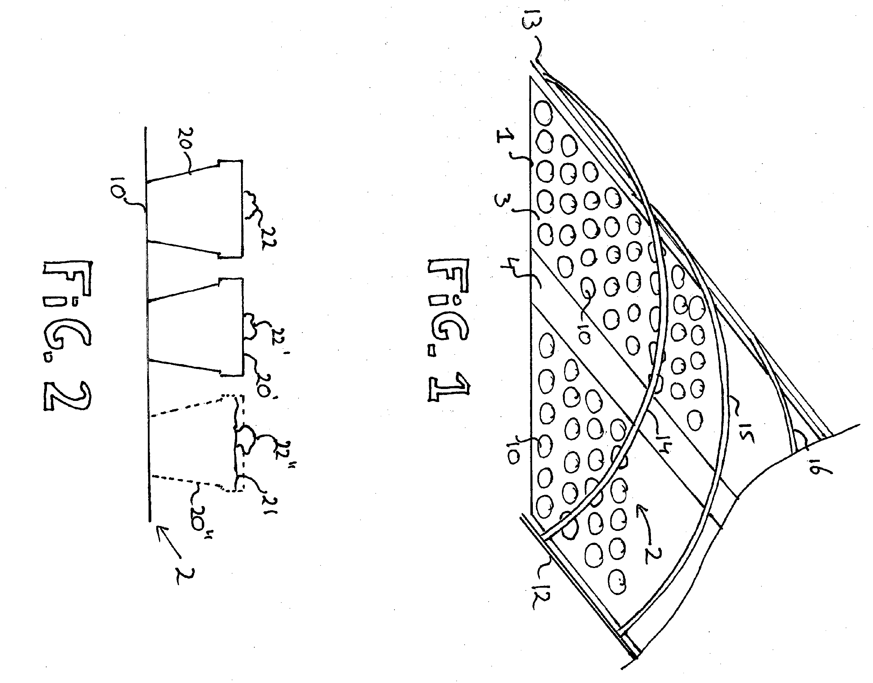

Figure 1 schematically shows a prior art bed 1 for nursery cultivation of ornamental plants 22 (see figure 2) in pots 20 (see figure 2). The bed 1 in this embodiment is comprised of a right hand side section 2, comprising multiple sites 10 to positions pots, and a left hand side section 3, also comprising multiple sites 10 to position pots. The two sides are divided by a path 4 that is meant for walking through by an operator to perform various tasks needed in the cultivation process or simply to inspect the growth of the plants. Alongside the bed 1 are conduits 12 and 13 through which water (optionally containing nutrients) may be pumped. To these elongated conduits, convex spray conduits 14, 15 and 16 are operatively connected such that the water may be sprayed towards the bed.

It is noted that in practice the sites 10 are mostly not explicitly indicated on the bed. The bed commonly exists of a fabric, lain on top of the ground, on which fabric the pots are positioned.

### Figure 2

Figure 2 schematically shows a number of pots (20, 20' and 20") provided with substrate 21 and plants (22, 22' and 22"), positioned on a portion 2 of the bed. Each pot is positioned on a site 10 of the bed. Pot 20" is depicted in a see-trough version in order to show the substrate 21 that is present in the pot.

### Figure 3

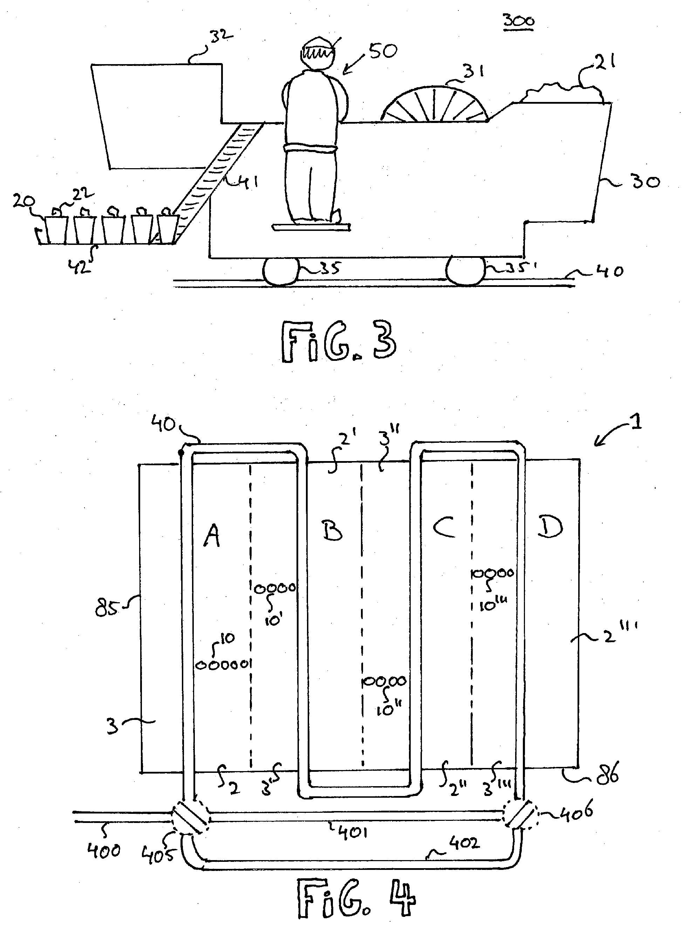

Figure 3 schematically shows a potting up machine 300 for use in the present method and system. The machine 300 in this embodiment comprises the potting up technology of the potting up machine as described in NL 2000087 (see figure 4 of this NL patent in particular). The machine 300 at its heart has the potting up wheel 31 to feed substrate 21 to the individual pots (not shown). These pots are comprised internal of the machine. The substrate 21 is present in open compartment 30, and the small plants are present in compartment 32. At this machine, an operator 50 is present to manually put a plant in each pot that is automatically filled with substrate by the machine 300 itself. Thereafter, a pot provided with a plant is put on conveyer belt 41 and conveyed to intermediate carrier 42. When this carrier is filled with a matrix of pots (the carrier can have a 1x5 matrix, or a 2x5 matrix etc.) the pots are manually taken up with a fork and positioned on the bed. In an alternative embodiment, the machine is provided with an automatic fork to take up the matrix of pots and position them on the bed.

The machine 300 is provided with wheels 35 and 35' that are in operative connection with rails 40. This way, the machine can be transported easily over the rails, in this case by simply pushing the machine by hand. In an alternative embodiment the machine is provided with a small engine to be auto mobile, the operator typically controlling the transport speed and destination. The rails in this embodiment are simple steel pipes but they may have any form or constitution as long as they are suitable to guide the machine 300 over the bed.

### Figure 4

Figure 4 schematically shows the layout of a transport rails 40 over a cultivation bed 1 having a length 85 and a width 86. In this embodiment the bed 1 is divided into four compartments, indicated as A, B, C and D respectively in figure 4. Compartment A is divided by the rails 40 in sections 3 and 2 respectively. The same way, compartment B is divided into sections 3' and 2', compartment C is divided into section 3" and 2" and lastly, compartment D is divided into sections 3"' and 2"'.

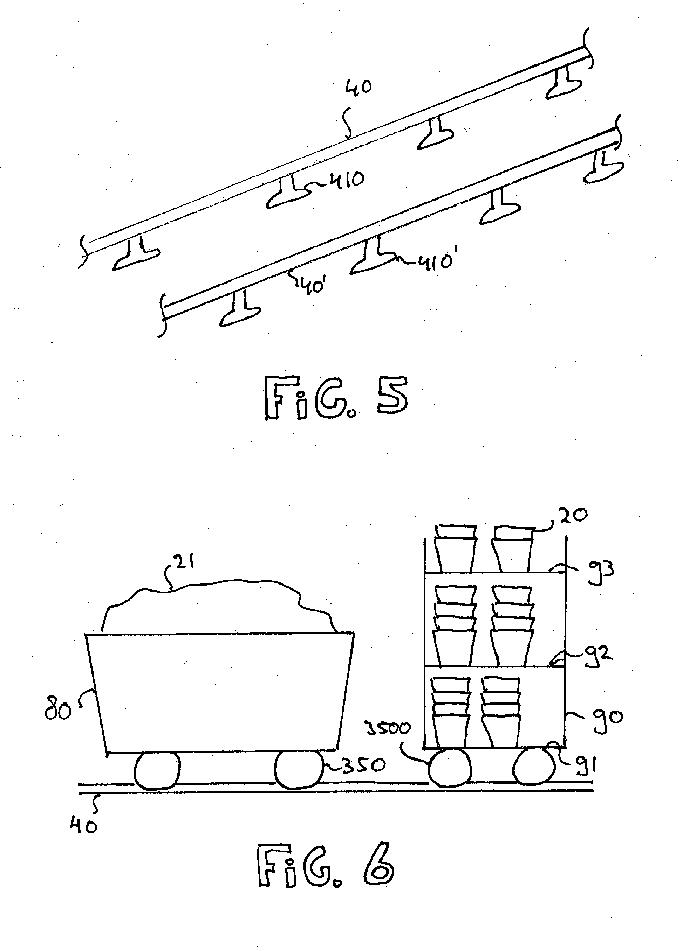

This way, the rails 40 in essence project over the bed 1 and thus, extend along the multiple sites 10 of each section 2 and 3 (only few sites 10 have been depicted for reasons of clarity in figure 4), and thus along the multiple sites of the bed 1 as a whole. The potting up machine 300 (not indicated in figure 4) can be transported over the bed to reach all sites of the bed 1, by being guided over the rails 40. The rail system comprises parts 400, 401 and 402 outside the bed 1. Part 400 in this embodiment is a docking station for the potting up machine. Part 401 is a part where one or more wagons 80 (see figure 6) can be filled with substrate 21. Part 402 is a part where one or more wagons 90 (see figure 6) can be filled with empty pots 20. These wagons can be used to supply the machine 300 with new substrate 21 and new pots 20 whenever needed. For this, the rail system, comprises switches 405 and 406 in order to get the wagons on the rails 40.

In operation, the potting up machine is pushed from its docking station 400, via switch 405 to rails 40 and enters the bed 1 between sections 2 and 3 of compartment A. The machine held stationary, placed 2 meters into the bed, and then starts to automatically fill pots with an amount of substrate. An operator present at the machine manually puts a plant in each pot. The filled pots are conveyed to an intermediate carrier 42 (see figure 3) and thereafter manually positioned on corresponding sites 10 of the bed by a second operator, using a hand-held pot fork. As soon as the sites 10 adjacent the location where the potting up machine was initially placed (typically all sites from an upstream distance of two meters to a downstream distance of two meters from the machine 300) are filled with pots, the machine is pushed further over the rails to reach positions adjacent further sites of sections 2 and 3 which have not been provided with pots (in this case the machine is pushed four meters in downstream direction). The process then repeats until all sites of the sections of all four compartments A, B, C and D of bed 1 have been provided with pots.

### Figure 5

Figure 5 schematically shows a rails 40 or use in the invention. The rails in this embodiment comprise two steel tubes 40 (and 40') which are supported above the ground surface by legs 410 (and 410'). When compared to commonly known rails for use in crop cultivation (for example for transporting harvest carts), the number of supporting legs is increased in order to reliably carry the weight of the potting up machine 300 (not shown in figure 5), typically about 1000 kilograms.

### Figure 6

Figure 6 schematically shows wagons 80 and 90 for use in the invention. Both wagons are in operative connection with rails 40 for transport thereon, using wheels 350 and 3500 respectively. Wagon 80 is an open carriage type wagon for holding substrate 21. Wagon 90 is a Danish cart type wagon having different levels 91, 92 and 93 for holding multiple empty pots 20. It is noted that the way the supplies are provided to the potting up machine is not critical for application of the invention in its broadest sense.

## Claims

1. Method to position a number of pots (20) holding ornamental plants (22) on a bed (1) for nursery cultivation of the ornamental plants (22), the bed (1) comprising multiple sites (10), each site (10) corresponding to one of the pots (20), the method comprising:
- providing a potting up machine (300) that automatically fills each pot (20) with an amount of substrate (21) for growth of the plant (22),
- having the machine (300) filling the number of pots (20) with substrate (21),
- putting an ornamental plant (22) in each of the pots (20) filled with substrate (21),
- positioning each pot (20) holding an ornamental plant (22) on a site (10) of the bed (1),
**characterised in that** the potting up machine (300) is transported along a length (85) of the bed (1) while it is operable for filling the pots (20) with substrate (21), wherein each pot (20) is filled with substrate (21) when the machine (300) is adjacent the site (10) corresponding to that pot (20).

2. A method according to claim 1, **characterised in that** the machine (300) is transported along a length (85) and width (86) of the bed (1).

3. A method according to claim 1 or 2, **characterised in that** the machine (300) is transported over the bed (1).

4. Method according to any of the claims 1 to 3, **characterised in that** the filling of the pot (20) with substrate (21) and the ornamental plant (22) is followed by an automatic conveying of the pot (20) from the machine (300) towards the bed (1).

5. Method according to claim 4, **characterised in that** the conveying comprises the steps of making a matrix of pots (20) on an intermediate carrier (42) that is transported along with the machine (300), whereafter the matrix of pots (20) is unloaded to the bed (1).

6. Method according to any of the preceding claims, **characterised in that** the machine (300) is transported over the bed (1) intermittently.

7. Method according to claim 6, **characterised in that** the machine (300) is transported automatically or manually.

8. Method according to any of the claims 1 to 5, **characterised in that** the machine (300) is transported continuously.

9. Method according to any of the preceding claims, **characterised in that** the machine (300) is transported over a rail system (40) that in essence extends along all sites (10) of the bed (1).

10. Method according to claim 9, **characterised in that** the rail system (40) is used to supply substrate (21) and pots (20) to the potting up machine (300).

11. System for positioning a number of pots (20), each pot holding an ornamental plant (22), on a bed (1) for nursery cultivation of the ornamental plants (22), the system comprising:
- a bed (1) for the nursery cultivation of the plants (22), the plants (22) being present in separate pots (20), wherein the bed (1) comprises multiple sites (10), each site (10) being suitable for holding one pot (1),
- a transporting means (40) covering a length (85) of the bed (1), which system (40) extends along the multiple sites (10),
- a potting up machine (300) for automatically filling each pot (20) with an amount of substrate (21) for growth of the plant (22), wherein the potting up machine (300) is in operative connection with the transporting means (40) such that the machine (300) is transportable along the length of the bed (1) to reach positions adjacent each of the said sites (10) while it is operable for filling the pots (20) with substrate (21).

12. System according to claim 11, **characterised in that** the transporting means (40) in essence covers a length (85) and width (86) of the bed (1).

13. System according to claim 12, **characterised in that** the transport means projects over the bed (1).

14. System according to any of the claims 11 to 13, **characterised in that** the system further comprises one or more wagons (80, 90) in operative connection with the transporting means (40), the wagons (80, 90) being suitable for supplying substrate (21) and pots (20) to the potting up machine (300) while it is in operation for filling the pots (20).

15. System according to any of the claims 11 to 14, **characterised in that** the system comprises an intermediate carrier (42) that is transported along with the machine (300), the carrier (42) being an intermediate for carrying pots (20) in the form of a matrix, after these pots (20) have been filled at the potting up machine (300) with substrate (21) and a plant (22), and before being positioned on a site (10) of the bed (1).

## Patentansprüche

1. Verfahren zum Anordnen einer Anzahl von Töpfen (20), die Zierpflanzen (22) auf einem Bett (1) zur Gärtnereikultivierung der Zierpflanzen (22) enthalten, wobei das Bett (1) mehrere Aufstellorte (10) umfasst, wobei jeder Aufstellort (10) einem der Töpfe (20) entspricht, wobei das Verfahren Folgendes umfasst:
- Bereitstellen einer Eintopfmaschine (300), die automatisch jeden Topf (20) mit einer Menge von Substrat (21) für das Wachstum der Pflanze (22) befüllt,
- Befüllen lassen der Anzahl von Töpfen (20) mit Substrat (21) durch die Maschine (300),
- Setzen einer Zierpflanze (22) in jeden der mit Substrat (21) gefüllten Töpfe (20),
- Anordnen jedes Topfs (20), der eine Zierpflanze (22) enthält, an einem Aufstellort (10) des Betts (1),
**dadurch gekennzeichnet, dass** die Eintopfmaschine (300) entlang einer Länge (85) des Betts (1) transportiert wird während sie betriebsfähig ist zum Füllen der Töpfe (20) mit Substrat (21), wobei jeder Topf (20) mit Substrat (21) gefüllt wird, wenn sich die Maschine (300) neben dem dem Topf (20) entsprechenden Aufstellort (10) befindet.

2. Verfahren nach Anspruch 1, **dadurch gekennzeichnet, dass** die Maschine (300) entlang einer Länge (85) und einer Breite (86) des Betts (1) transportiert wird.

3. Verfahren nach Anspruch 1 oder 2, **dadurch gekennzeichnet, dass** die Maschine (300) über das Bett (1) transportiert wird.

4. Verfahren nach einem der Ansprüche 1 bis 3, **dadurch gekennzeichnet, dass** dem Befüllen des Topfs (1) mit Substrat (21) und der Zierpflanze (22) ein automatisches Befördern des Topfs (20) von der Maschine (300) in Richtung des Betts (1) folgt.

5. Verfahren nach Anspruch 4, **dadurch gekennzeichnet, dass** das Befördern die Schritte des Herstellens einer Matrix von Töpfen (20) auf einer Zwischenablage (42) umfasst, die gemeinsam mit der Maschine (300) transportiert wird, wonach die Matrix von Töpfen (20) auf das Bett (1) entladen wird.

6. Verfahren nach einem der vorherigen Ansprüche, **dadurch gekennzeichnet, dass** die Maschine (300) periodisch über das Bett (1) transportiert wird.

7. Verfahren nach Anspruch 6, **dadurch gekennzeichnet, dass** die Maschine (300) automatisch oder manuell transportiert wird.

8. Verfahren nach einem der Ansprüche 1 bis 5, **dadurch gekennzeichnet, dass** die Maschine (300) ununterbrochen transportiert wird.

9. Verfahren nach einem der vorherigen Ansprüche, **dadurch gekennzeichnet, dass** die Maschine (300) über ein Schienensystem (40) transportiert wird, das sich im Wesentlichen entlang sämtlicher Aufstellorte (10) des Betts (1) erstreckt.

10. Verfahren nach Anspruch 9, **dadurch gekennzeichnet, dass** das Schienensystem (40) verwendet wird, um Substrat (21) und Töpfe (20) an die Eintopfmaschine (300) zu liefern.

11. System zum Anordnen einer Anzahl von Töpfen (20), wobei jeder Topf eine Zierpflanze (22) enthält, auf einem Bett (1) zur Gärtnereikultivierung der Zierpflanzen (22), wobei das System Folgendes umfasst:
- ein Bett (1) zur Gärtnereikultivierung der Zierpflanzen (22), wobei die Pflanzen (22) in getrennten Töpfen (20) vorliegen, wobei das Bett (1) mehrere Aufstellorte (10) umfasst, wobei jeder Aufstellort (10) zum Aufnehmen eines Topfs (1) geeignet ist,
- eine Transportvorrichtung (40), die eine Länge (85) des Betts (1) abdeckt, wobei sich das System (40) entlang der mehreren Aufstellorte (10) erstreckt,
- eine Eintopfmaschine (300) zum automatischen Befüllen jedes Topfs (20) mit einer Menge von Substrat (21) für das Wachstum der Pflanze (22), wobei die Eintopfmaschine (300) operativ mit der Transportvorrichtung (40) derart verbunden ist, dass die Maschine (300) entlang der Länge des Betts (1) transportierbar ist, um Positionen zu erreichen, die neben jedem der Aufstellorte (10) liegen, während sie betriebsfähig ist, um die Töpfe (20) mit Substrat (21) zu befüllen.

12. System nach Anspruch 11, **dadurch gekennzeichnet, dass** die Transportvorrichtung (40) im Wesentlichen eine Länge (85) und eine Breite (86) des Betts (1) abdeckt.

13. System nach Anspruch 12, **dadurch gekennzeichnet, dass** die Transportvorrichtung über dem Bett (1) hervorragt.

14. System nach einem der Ansprüche 11 bis 13, **dadurch gekennzeichnet, dass** das System ferner einen oder mehrere Wagons (80, 90) umfasst, die operativ mit der Transportvorrichtung (40) verbunden sind, wobei die Wagons (80, 90) dazu geeignet sind, Substrat (21) und Töpfe (20) an die Eintopfmaschine (300) zu liefern, während diese zum Befüllen der Töpfe (20) im Betrieb ist.

15. System nach einem der Ansprüche 11 bis 14, **dadurch gekennzeichnet, dass** das System eine Zwischenablage (42) umfasst, die gemeinsam mit der Maschine (300) transportiert wird, wobei die Ablage (42) ein Zwischenglied zum Tragen von Töpfen (20) in Form einer Matrix ist, nachdem diese Töpfe (20) an der Eintopfmaschine (300) mit Substrat (21) und einer Pflanze (22) befüllt worden sind und bevor sie an einem Aufstellort (10) auf dem Bett (1) angeordnet werden.

## Revendications

1. Procédé pour positionner un nombre de pots (20) contenant des plantes ornementales (22) sur un fond (1) pour culture en pépinière des plantes ornementales (22), le fond (1) comprenant des sites (10) multiples, chaque site (10) correspondant à un des pots (20), le procédé comprenant les étapes consistant à :
- fournir une machine (300) à rempoter qui remplit automatiquement chaque pot (20) d'une quantité de substrat (21) pour croissance de la plante (22),
- avoir la machine (300) remplir le nombre de pots (20) avec du substrat (21),
- positionner une plante ornementale (22) dans chacun des pots (20) remplis de substrat (21),
- positionner chaque pot (20) contenant une plante ornementale (22) sur un site (10) du fond (1),
**caractérisé en ce que** la machine (300) à rempoter est transportée le long d'une longueur (85) du fond (1) tout en étant opérationnelle pour remplir les pots (20) avec du substrat (21), chaque pot (20) étant rempli de substrat (21) quand la machine (300) est adjacente au site (10) correspondant à ce pot (20).

2. Procédé selon la revendication 1, **caractérisé en ce que** la machine (300) est transportée le long d'une longueur (85) et d'une largeur (86) du fond (1).

3. Procédé selon la revendication 1 ou 2, **caractérisé en ce que** la machine (300) est transportée par-dessus le fond (1).

4. Procédé selon l'une quelconque des revendications 1 à 3, **caractérisé en ce que** le remplissage du pot (20) avec du substrat (21) et la plante ornementale (22) est suivi par un transport automatique du pot (20) depuis la machine (300) vers le fond (1).

5. Procédé selon la revendication 4, **caractérisé en ce que** le transport comprend les étapes consistant à fabriquer une matrice de pots (20) sur un support intermédiaire (42) qui est transporté avec la machine (300), la matrice de pots (20) étant ensuite déchargée sur le fond (1).

6. Procédé selon l'une quelconque des revendications précédentes, **caractérisé en ce que** la machine (300) est transportée sur le fond (1) de façon intermittente.

7. Procédé selon la revendication 6, **caractérisé en ce que** la machine (300) est transportée de façon automatique ou manuelle.

8. Procédé selon l'une quelconque des revendications 1 à 5, **caractérisé en ce que** la machine (300) est transportée de façon continue.

9. Procédé selon l'une quelconque des revendications précédentes, **caractérisé en ce que** la machine (300) est transportée sur un système de rail (40) qui par nature s'étend le long de tous les sites (10) du fond (1).

10. Procédé selon la revendication 9, **caractérisé en ce que** le système de rail (40) est utilisé pour fournir du substrat (21) et des pots (20) à la machine (300) à rempoter.

11. Système pour positionner un nombre de pots (20), chaque pot contenant une plante ornementale (22), sur un fond (1) pour culture en pépinière des plantes ornementales (22), le système comprenant :
- un fond (1) pour la culture en pépinière des plantes (22), les plantes (22) étant présentes dans des pots séparés (20), le fond (1) comprenant des sites (10) multiples, chaque site (10) étant approprié pour contenir un pot (1),
- un moyen de transport (40) recouvrant une longueur (85) du fond (1), lequel système (40) s'étend le long des sites (10) multiples,
- une machine (300) à rempoter pour remplir automatiquement chaque pot (20) avec une quantité de substrat (21) pour la croissance de la plante (22), la machine (300) à rempoter étant en connexion fonctionnelle avec le moyen de transport (40) de sorte que la machine (300) peut être transportée le long de la longueur du fond (1) pour atteindre des positions adjacentes à chacun desdits sites (10) tout en étant opérationnelle pour remplir les pots (20) avec du substrat (21).

12. Système selon la revendication 11, **caractérisé en ce que** le moyen de transport (40) par nature recouvre une longueur (85) et une largeur (86) du fond (1).

13. Système selon la revendication 12, **caractérisé en ce que** le moyen de transport fait saillie par-dessus le fond (1).

14. Système selon l'une quelconque des revendications 11 à 13, **caractérisé en ce que** le système comprend en outre un ou plusieurs wagons (80, 90) en connexion fonctionnelle avec le moyen de transport (40), les wagons (80, 90) étant appropriés pour fournir du substrat (21) et des pots (20) à la machine (300) à rempoter quand elle est opérationnelle pour remplir les pots (20).

15. Système selon l'une quelconque des revendications 11 à 14, **caractérisé en ce que** le système comprend un support intermédiaire (42) qui est transporté le long de la machine (300), le support (42) étant un intermédiaire pour transporter des pots (20) sous la forme d'une matrice, une fois que ces pots (20) ont été remplis au niveau de la machine (300) à rempoter de substrat (21) et d'une plante (22), et avant qu'ils ne soient positionnés sur un site (10) du fond (1).
